# EUROPÄISCHE PATENTSCHRIFT

(11) **EP 3 609 727 B1**
(45) Veröffentlichungstag und Bekanntmachung des Hinweises auf die Patenterteilung: **15.12.2021**
(21) Anmeldenummer: 17717703.7
(22) Anmeldetag: 13.04.2017
(51) Int. Cl.: B60K 6/20, B60K 17/02, B60K 17/35, B60K 17/356, B60K 1/00

(54) **VERFAHREN UND VORRICHTUNG ZUM BETRIEB EINES ANTRIEBSSTRANGES**
METHOD AND DEVICE FOR OPERATING A DRIVETRAIN
PROCÉDÉ ET DISPOSITIF PERMETTANT DE FAIRE FONCTIONNER UNE CHAÎNE CINÉMATIQUE

(43) Veröffentlichungstag der Anmeldung: 19.02.2020
(73) Patentinhaber: GKN Automotive Ltd., West Midlands, B37 7YE (GB)
(72) Erfinder: GÜTH, Dirk, 53757 St. Augustin (DE); HAUPT, Jan, 51515 Kürten (DE)
(74) Vertreter: karo IP
(86) Internationale Anmeldenummer: PCT/EP2017/058955
(87) Internationale Veröffentlichungsnummer: WO 2018/188754

(56) Entgegenhaltungen:
- EP-A1- 2 851 227
- EP-A2- 1 550 820
- WO-A1-2014/033137
- DE-A1-102010 017 966

## Beschreibung

Die vorliegende Erfindung betrifft ein Verfahren und Vorrichtung zum Betrieb eines Antriebsstranges eines Kraftfahrzeugs. Der Antriebsstrang umfasst zumindest eine erste Welle und eine zweite Welle, eine erste Kupplung mit zumindest einer ersten Reibflächenpaarung sowie einen elektrischen Antrieb, wobei die erste Welle und die zweite Welle über die zumindest eine erste Reibflächenpaarung miteinander koppelbar sind. Zur Kühlung der ersten Kupplung wird ein Fluid (z. B. ein Hydrauliköl) eingesetzt, durch das ein Schleppmoment der ersten Kupplung nach dem Öffnen der ersten Kupplung beeinflusst wird.

Insbesondere sind die erste Kupplung, die erste Welle und die zweite Welle Bestandteil einer gemeinsamen Achse eines Kraftfahrzeuges, wobei ein Antriebsdrehmoment einer weiteren Antriebseinheit (eine Verbrennungskraftmaschine, ein weiterer elektrischer Antrieb, etc.) über die erste Welle auf die zweite Welle und über die zweite Welle auf ein erstes Rad des Kraftfahrzeuges übertragbar ist.

Die erste Kupplung kann insbesondere individuell angesteuert werden, so dass das erste Rad durch einen im Wesentlichen frei einstellbaren Anteil des Antriebsdrehmoments der Antriebseinheit antreibbar ist.

Durch den elektrischen Antrieb der ersten Welle kann ein weiteres Antriebsdrehmoment auf das Rad übertragen werden. Dabei ist die erste Welle insbesondere von der Antriebseinheit entkoppelbar.

Es besteht ein ständiges Bedürfnis, Antriebstränge von Kraftfahrzeugen zu verbessern. Insbesondere soll eine möglichst freie Verteilung der über die unterschiedlichen Antriebseinheiten bereitgestellten Antriebsdrehmomente auf die Räder erreicht werden (z. B. bekannt als Torque-Vectoring). Dabei soll die Regelung der Verteilung möglichst dynamisch erfolgen.

Aus EP 2 851 227 A1 ist ein Hinterradantrieb bekannt, bei dem ein elektrischer Motor über eine Kupplung mit der Hinterachse verbindbar ist. Die Hinterachse wird sonst über einen Verbrennungsmotor angetrieben. Dieser ist mit der Hinterachse permanent verbunden.

Aus der EP 1 550 820 A2 ist ein Kraftfahrzeug mit einem eine Mehrfach-Kupplungseinrichtung aufweisenden Antriebsstrang bekannt.

Aus der WO 2014/033137 A1 ist ein Antriebsstrang mit einem Verbrennungsmotor und einem Elektromotor bekannt. Dabei kann ein Antriebsdrehmoment des Elektromotors zusätzlich oder alternativ zum Verbrennungsmotor auf die jeweilige Achse übertragen und durch Kupplungen geregelt werden.

Aufgabe der Erfindung ist es daher, die mit Bezug auf den Stand der Technik vorhandenen Probleme zumindest teilweise zu lösen und insbesondere ein Verfahren und eine Vorrichtung bereitzustellen, durch welche die Verteilung der Antriebsdrehmomente weiter verbessert wird.

Diese Aufgaben werden gelöst mit einem Verfahren gemäß den Merkmalen des Patentanspruchs 1. Weitere vorteilhafte Ausgestaltungen des Verfahrens, einer Vorrichtung und der Erfindung sind in den weiteren Patentansprüchen angegeben. Es ist darauf hinzuweisen, dass die in den abhängigen Patentansprüchen einzeln aufgeführten Merkmale in technologisch sinnvoller Weise miteinander kombiniert werden können und weitere Ausgestaltungen der Erfindung, entsprechend der Ansprüche, definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zum Betrieb eines Antriebsstranges eines Kraftfahrzeugs, das die Merkmale des Anspruchs 1 aufweist, bei.

Es wurde herausgefunden, dass unmittelbar nach dem Öffnen der ersten Kupplung ein Schleppmoment vorliegt, das sich über die Zeit abbaut. Dieses Schleppmoment wird durch das zur Kühlung der ersten Kupplung bereitgestellte Fluid beeinflusst, das nach dem Öffnen zwischen zumindest der ersten Reibflächenpaarung vorliegt. Dieses Schleppmoment beeinflusst aber das auf das erste Rad übertragene Antriebsdrehmoment, so dass eine Regelung des auf das erste Rad zu übertragenden Antriebsdrehmoments erschwert wird. Dabei wurde insbesondere festgestellt, dass dieses Schleppmoment sich gerade bei geringen Fahrgeschwindigkeiten des Kraftfahrzeuges nur langsam abbaut bzw. einen hohen Wert aufweist.

Das Verfahren ist insbesondere so eingerichtet, dass das Fluid möglichst schnell aus der Kupplung bzw. zumindest aus dem Bereich der ersten Reibflächenpaarung zu entfernen. Dies kann dadurch erreicht werden, dass die erste Welle unmittelbar nach dem Öffnen der Kupplung (also wenn die erste Reibflächenpaarung aufgelöst wird) beschleunigt wird. Infolge der Erhöhung der Drehzahl der ersten Welle wird insbesondere eine (höhere) Zentrifugalkraft auf das Fluid übertragen, durch die das Fluid schneller zumindest aus dem Bereich der ersten Reibflächenpaarung zumindest teilweise entfernt wird.

Die beschleunigte Abführung des Fluids zumindest aus dem Bereich der ersten Reibflächenpaarung kann dazu führen, dass das Schleppmoment an der ersten Reibflächenpaarung beschleunigt abgebaut wird. Damit ist eine von anderen Einflüssen unabhängige und individuelle Regelung des auf das erste Rad übertragenen Antriebsdrehmoments schneller möglich.

Insbesondere weist zumindest die erste Welle in Schritt a) und unmittelbar vor Schritt b) eine erste Drehzahl auf, wobei die erste Welle in Schritt c) durch den elektrischen Antrieb auf eine zweite Drehzahl beschleunigt wird, die höher ist als die erste Drehzahl, insbesondere zumindest 100 Umdrehungen pro Minute, bevorzugt zumindest 500 Umdrehungen pro Minute, besonders bevorzugt zumindest 750 Umdrehungen pro Minute, höher ist als die erste Drehzahl. Die zweite Drehzahl kann insbesondere um mindestens 1.500 Umdrehungen pro Minute höher als die erste Drehzahl sein.

Insbesondere wird durch die Erhöhung der ersten Drehzahl der ersten Welle die Drehzahl der zweiten Welle nicht (wesentlich) beeinflusst.

Bevorzugt wird die erste Welle in Schritt c) über einen Zeitraum von mindestens 0,1 Sekunden, insbesondere von mindestens 0,3 Sekunden, bevorzugt von mindestens 0,5 Sekunden, beschleunigt. "Beschleunigt" heißt insbesondere, dass die erste Drehzahl innerhalb des Zeitraums kontinuierlich gesteigert wird. Bevorzugt wird danach der elektrische Antrieb wieder ausgeschaltet bzw. überträgt kein eigenes Antriebsdrehmoment auf die erste Welle.

Insbesondere wird die erste Welle im Anschluss an die Beschleunigung über einen Zeitraum von mindestens 0,1 Sekunden, insbesondere von mindestens 0,3 Sekunden, bevorzugt von mindestens 0,5 Sekunden, auf einer erhöhten Drehzahl gehalten. Bevorzugt wird am Ende oder nach Ablauf dieses Zeitraums der elektrische Antrieb wieder ausgeschaltet bzw. überträgt kein eigenes Antriebsdrehmoment auf die erste Welle.

Die erste Welle kann in Schritt c) über einen Zeitraum von höchstens 2,0 Sekunden, insbesondere von höchstens 1,0 Sekunden, bevorzugt von höchstens 0,5 Sekunden, beschleunigt werden.

Insbesondere wird die erste Welle im Anschluss an die Beschleunigung über einen Zeitraum von höchstens 2,0 Sekunden, insbesondere von höchstens 1,0 Sekunden, bevorzugt von höchstens 0,5 Sekunden, auf einer erhöhten Drehzahl gehalten.

Der Antriebsstrang kann (zusätzlich) eine dritte Welle und eine zweite Kupplung mit zumindest einer zweiten Reibflächenpaarung aufweisen. Die erste Welle und die dritte Welle sind über die zumindest eine zweite Reibflächenpaarung miteinander koppelbar. Zur Kühlung der zweiten Kupplung wird ein Fluid eingesetzt, durch das ein Schleppmoment der zweiten Kupplung nach dem Öffnen der zweiten Kupplung beeinflusst wird. In Schritt b) wird (insbesondere gleichzeitig mit der ersten Kupplung) die zweite Kupplung geöffnet, wobei in Schritt c) das Fluid aus dem Bereich der zumindest einen zweiten Reibflächenpaarung abgeführt wird.

Insbesondere erfolgen die Vorgänge der Schritte b) und c) mit Bezug auf die zweite Kupplung und die dritte Welle zeitgleich mit den Vorgängen an der ersten Kupplung und der zweiten Welle. Bevorzugt ist unerheblich, ob vor Schritt b) die zweite Kupplung im Zustand "offen" oder "geschlossen" ist. Insbesondere rotieren die erste Welle und die dritte Welle gemäß Schritt a) und unmittelbar vor Schritt b) bei zumindest teilweise geschlossener zweiter Kupplung.

Insbesondere erfolgt Schritt c) ausschließlich dann, wenn eine erste Drehzahl der ersten Welle unmittelbar vor Schritt b) höchstens 2.500 Umdrehungen pro Minute, insbesondere höchstens 2.000 Umdrehungen pro Minute, bevorzugt höchstens 1.500 Umdrehungen pro Minute beträgt.

Die beschleunigte Abführung des Fluids zumindest aus den Bereichen der ersten bzw. zweiten Reibpaarung ist besonders effektiv bei geringen Drehzahlen der ersten Welle. Daher findet das Verfahren für Bereiche bis zu dieser maximalen Drehzahl der ersten Welle bevorzugt bzw. ausschließlich Anwendung.

Insbesondere weist der Antriebsstrang eine weitere Antriebseinheit (z. B. eine Verbrennungskraftmaschine, einen weiteren elektrischen Antrieb, etc.) auf, wobei ein Antriebsdrehmoment der Antriebseinheit über die erste Welle zumindest auf die zweite Welle und über die zweite Welle auf ein erstes Rad des Kraftfahrzeugs übertragbar ist, wobei vor Schritt c) die weitere Antriebseinheit von der ersten Welle entkoppelt wird.

Es wird insbesondere vorgeschlagen, dass die erste Welle über den elektrischen Antrieb beschleunigt wird. Dabei ist ein von dem elektrischen Antrieb zur Beschleunigung der ersten Welle bereitgestelltes Antriebsdrehmoment (in diesem Zeitabschnitt) nicht für einen Antrieb der Räder des Kraftfahrzeuges vorgesehen. Weiter wird die erste Welle von möglichst vielen anderen Komponenten des Antriebsstrangs entkoppelt, so dass eine möglichst schnelle und geringe elektrische Leistung beanspruchende bzw. elektrische Energie verbrauchende Ansteuerung der ersten Welle erfolgen kann.

Insbesondere wird vorgeschlagen, dass das hier beschriebene Verfahren zuschaltbar ist bzw. nur in bestimmten bzw. vorgegebenen Fahrzuständen oder Betriebsmodi durchgeführt wird. Damit kann ein elektrischer Verbrauch (durch den elektrischen Antrieb) minimiert werden, wenn eine hochdynamische Ansteuerung der über die zweite oder dritte Welle angetriebenen Räder nicht erforderlich oder nicht gewünscht ist.

Es wird ein Antriebsstrang für ein Kraftfahrzeug vorgeschlagen, wobei der Antriebstrang zumindest eine erste Welle und eine zweite Welle, eine erste Kupplung mit zumindest einer ersten Reibflächenpaarung sowie einen elektrischen Antrieb umfasst. Die erste Welle und die zweite Welle sind über die zumindest eine erste Reibflächenpaarung miteinander koppelbar. Der Antriebsstrang ist zur Durchführung des Verfahrens nach einem der vorherigen Patentansprüche eingerichtet und geeignet und kann damit das Verfahren durchführen. Hierfür kann eine Kontrolleinheit bzw. Steuereinheit, beispielsweise mit mindestens einem elektronischen Speichermodul, vorgesehen sein, in der eine Software integriert ist, die die Verfahrensschritte und/oder die Aktivierung bzw. Deaktivierung der Komponenten des Antriebsstranges entsprechend ausführt bzw. vorgibt.

Insbesondere sind die erste Welle und die zweite Welle Bestandteil einer gemeinsamen Achse des Kraftfahrzeuges, wobei über die zweite Welle ein erstes Rad des Kraftfahrzeuges mit der ersten Welle verbindbar ist.

Insbesondere weist der Antriebsstrang eine dritte Welle und eine zweite Kupplung mit zumindest einer zweiten Reibflächenpaarung auf, wobei die erste Welle und die dritte Welle über die zumindest eine zweite Reibflächenpaarung miteinander koppelbar sind; wobei auch die dritte Welle Bestandteil der Achse ist, wobei über die dritte Welle ein zweites Rad des Kraftfahrzeuges mit der ersten Welle verbindbar ist.

Bevorzugt weist der Antriebsstrang eine weitere Antriebseinheit (Verbrennungskraftmaschine, weiterer elektrischer Antrieb, etc.) auf, wobei ein Antriebsdrehmoment der Antriebseinheit über die erste Welle zumindest auf die zweite Welle (ggf. zusätzlich auf die dritte Welle) und über die zweite Welle auf ein erstes Rad (ggf. über die dritte Welle auf ein zweites Rad derselben Achse) des Kraftfahrzeugs übertragbar ist, wobei die Antriebseinheit über zumindest eine dritte Kupplung von der ersten Welle entkoppelbar ist.

Insbesondere ist zumindest eine Steuereinheit vorgesehen, die die Durchführung des Verfahrens initiiert und steuert. Insbesondere kann über die Steuereinheit geregelt werden, dass das hier beschriebene Verfahren zuschaltbar ist bzw. nur in bestimmten Fahrzuständen oder Betriebsmodi durchgeführt wird.

Die Ausführungen zu dem Verfahren gelten gleichermaßen für den Antriebsstrang und umgekehrt. Insoweit können technische Merkmale, die im Zusammenhang mit dem Verfahren erwähnt wurden, einzeln oder in Kombination miteinander auch zur weiteren Charakterisierung des Antriebsstrangs verwendet werden und umgekehrt.

Insbesondere ist zumindest die erste Kupplung (und ggf. zumindest auch die zweite Kupplung) eine Lamellenkupplung, wobei bei geschlossener Kupplung die Reibflächen an den Lamellen (die jeweils an einem äußeren Lamellenträger oder an einem inneren Lamellenträger angeordnet sind) aneinander liegen und ein Antriebsdrehmoment übertragen. Bei geöffneter Kupplung sind die Lamellen voneinander beabstandet angeordnet, so dass kein Antriebsdrehmoment übertragbar ist. Insbesondere bildet eine an dem äußeren Lamellenträger angeordnete erste Lamelle mit einer an dem inneren Lamellenträger angeordneten zweiten Lamelle eine Reibpaarung.

Vorsorglich sei angemerkt, dass die hier verwendeten Zahlwörter ("erste", "zweite", "dritte",...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung.

Die Erfindung, sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Gleiche Bezugszeichen bezeichnen gleiche Gegenstände, so dass ggf. Erläuterungen aus anderen Figuren ergänzend herangezogen werden können. Es zeigen schematisch:
- Fig. 1:: eine Teilansicht eines Antriebstrangs in einer Seitenansicht im Schnitt;
- Fig. 2:: ein Kraftfahrzeug mit einem Antriebsstrang; und
- Fig. 3:: ein Diagramm mit mehreren Verläufen eines Schleppmoments.

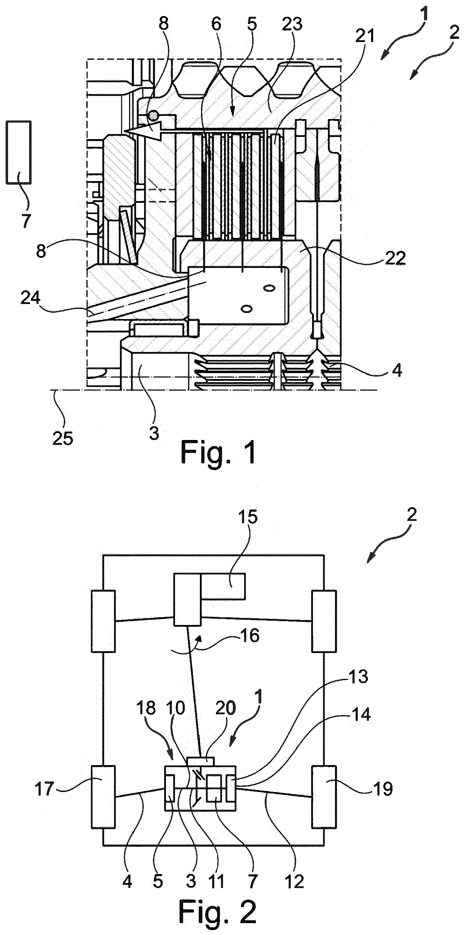

Fig. 1 zeigt eine Teilansicht eines Antriebstrangs 1 in einer Seitenansicht im Schnitt. Der Antriebstrang 1 umfasst eine erste Welle 3 und eine zweite Welle 4, eine erste Kupplung 5 mit ersten Reibflächenpaarungen 6 sowie einen elektrischen Antrieb 7. Die erste Welle 3 und die zweite Welle 4 sind über die ersten Reibflächenpaarungen 6 miteinander koppelbar. Die erste Kupplung 5 ist eine Lamellenkupplung, wobei bei geschlossener Kupplung 5 die Reibflächen an den Lamellen 21 (die jeweils an einem äußeren Lamellenträger 23 oder an einem inneren Lamellenträger 22 angeordnet sind) aneinander liegen und ein Antriebsdrehmoment übertragen. Bei geöffneter erster Kupplung 5 sind die Lamellen 21 voneinander beabstandet angeordnet, so dass kein Antriebsdrehmoment übertragbar ist. Eine an dem äußeren Lamellenträger 23 angeordnete erste Lamelle 21 bildet mit einer an dem inneren Lamellenträger 22 und benachbart zur ersten Lamelle 21 angeordneten zweiten Lamelle 21 eine erste Reibflächenpaarung 6. Die erste Kupplung 5 wird über eine Fluid(zu)leitung 24 mit einem Fluid 8 (z. B. Öl) zur Kühlung der Kupplung 5 versorgt.

Das Verfahren ist darauf gerichtet, das Fluid 8 möglichst schnell aus der ersten Kupplung 5 bzw. zumindest aus dem Bereich der ersten Reibflächenpaarung 6 (also der Kontaktzone der Lamellen 21 miteinander) zu entfernen. Dies wird dadurch erreicht, dass die erste Welle 3 unmittelbar nach dem Öffnen der ersten Kupplung 5 (also wenn die ersten Reibflächenpaarungen 6 aufgelöst werden in dem die Lamellen 21 voneinander entfernt werden) durch den Antrieb 7 beschleunigt wird. Infolge der Erhöhung der Drehzahl (von der ersten Drehzahl 10 auf eine zweite Drehzahl 11, siehe Fig. 2) der ersten Welle 3 wird eine Zentrifugalkraft auf das Fluid 8 übertragen, durch die das Fluid 8 schneller zumindest aus dem Bereich der ersten Reibflächenpaarungen 6 zumindest teilweise entfernt wird.

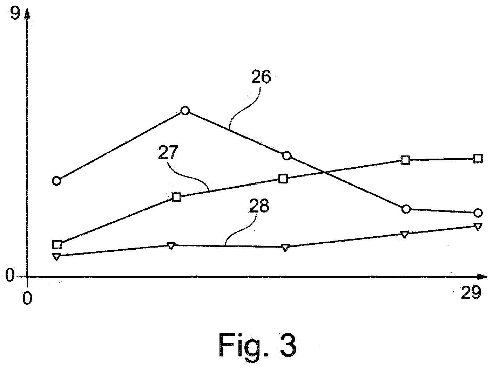

Die beschleunigte Abführung des Fluids 8 zumindest aus dem Bereich der ersten Reibflächenpaarungen 6 führt dazu, dass das Schleppmoment 9 (siehe Fig. 3) an den ersten Reibflächenpaarungen 6 beschleunigt abgebaut wird. Damit ist eine von anderen Einflüssen unabhängige und individuelle Regelung des auf das erste Rad 17 übertragenen Antriebsdrehmoments 16 schneller möglich (siehe Fig. 2).

Fig. 2 zeigt ein Kraftfahrzeug 2 mit einem Antriebsstrang 1. Das Kraftfahrzeug 2 weist vier Räder auf, wobei jeweils zwei Räder an einer gemeinsamen Achse angeordnet sind. Der Antriebsstrang 1 weist eine Antriebseinheit 15 (Verbrennungskraftmaschine, weiterer elektrischer Antrieb, etc.) auf, wobei ein Antriebsdrehmoment 16 der Antriebseinheit 15 (nach Bedarf aufgeteilt) über eine dritte Kupplung auf die erste Welle 3 und über die erste Welle 3 auf die zweite Welle 4 und zusätzlich auf die dritte Welle 12 und über die zweite Welle 4 auf ein erstes Rad 17 sowie über die dritte Welle 12 auf ein zweites Rad 19 derselben Achse 18 des Kraftfahrzeugs 2 übertragbar ist. Die Antriebseinheit 15 ist über die dritte Kupplung 20 von der ersten Welle 3 entkoppelbar.

Die erste Welle 3 und die zweite Welle 4 sind über die erste Reibflächenpaarung 6 miteinander koppelbar, wobei zur Kühlung der ersten Kupplung 5 ein Fluid 8 eingesetzt wird, durch das ein Schleppmoment 9 der ersten Kupplung 5 nach dem Öffnen der ersten Kupplung 5 beeinflusst wird. Gemäß dem Verfahren rotieren in Schritt a) die erste Welle 3 und die zweite Welle 4 bei zumindest teilweise geschlossener erster Kupplung 5. In Schritt b) wird die erste Kupplung 5 geöffnet. In Schritt c) wird die erste Welle 3 durch den elektrischen Antrieb 7 beschleunigt, so dass das Fluid 8 aus dem Bereich der ersten Reibflächenpaarung 6 beschleunigt abgeführt wird. Durch das beschleunigte Abführen des Fluids 8 wird das Schleppmoment 9 der ersten Kupplung 5 reduziert.

Die erste Welle 3 und die dritte Welle 12 sind über die zweite Reibflächenpaarung 14 der zweiten Kupplung 13 miteinander koppelbar. Zur Kühlung der zweiten Kupplung 13 wird ein Fluid 8 eingesetzt, durch das ein Schleppmoment 9 der zweiten Kupplung 13 nach dem Öffnen der zweiten Kupplung 13 beeinflusst wird. In Schritt b) wird (insbesondere gleichzeitig mit der ersten Kupplung 5) die zweite Kupplung 13 geöffnet, wobei in Schritt c) durch die Beschleunigung der ersten Welle 3 auch das Fluid 8 aus dem Bereich der zweiten Reibflächenpaarung 14 abgeführt wird.

Fig. 3 zeigt ein Diagramm mit mehreren Verläufen 26, 27, 28 eines Schleppmoments 9. Auf der vertikalen Achse ist das Schleppmoment 9 aufgetragen. Auf der horizontalen Achse ist die Geschwindigkeit 29 des Kraftfahrzeugs 2 aufgetragen, die sich proportional zu der ersten Drehzahl 10 (vor dem Öffnen der ersten Kupplung 5) verhält.

Die Verläufe 26 und 28 wurden an einem gleich ausgestalteten Antriebsstrang 1 ermittelt. Der zweite Verlauf 27 wurde an einem anderen bekannten Antriebstrang 1 ermittelt, wobei auch dort eine über einen elektrischen Antrieb 7 antreibbare erste Welle 3 vorliegt.

Der erste Verlauf 26 zeigt die Höhe eines kurz nach (ca. 0,5 Sekunden) dem Öffnen der Kupplung 5 vorliegenden Schleppmoments 9 an einer nicht angetriebenen Welle (hier z. B. die zweite Welle 4) für unterschiedliche Werte der Geschwindigkeit 29 des Kraftfahrzeugs (und für unterschiedliche Werte der ersten Drehzahl 10 der ersten Welle 3). Bei dem ersten Verlauf 26 wurde die erste Welle 3 nach dem Öffnen der ersten Kupplung 5 nicht beschleunigt.

Der dritte Verlauf 28 zeigt die Höhe eines kurz nach (ca. 0,5 Sekunden) dem Öffnen der ersten Kupplung 5 vorliegenden Schleppmoments 9 an einer nicht angetriebenen Welle (hier z. B. die zweite Welle 4) für unterschiedliche Werte der Geschwindigkeit 29 des Kraftfahrzeugs (und für unterschiedliche Werte der ersten Drehzahl 10 der ersten Welle 3 vor dem Öffnen der ersten Kupplung 5). Bei dem dritten Verlauf 28 wurde die erste Welle 3 nach dem Öffnen der ersten Kupplung 5 beschleunigt.

Es zeigt sich, dass gerade bei geringen Geschwindigkeiten 29 des Kraftfahrzeugs 2 (also bei niedriger erster Drehzahl 10 der ersten Welle 3) eine deutliche Reduzierung des Schleppmoments 9 erreicht werden kann.

Der zweite Verlauf 27 zeigt die Höhe eines kurz nach (ca. 0,5 Sekunden) dem Öffnen der ersten Kupplung 5 vorliegenden Schleppmoments 9 an einer nicht angetriebenen Welle (hier z. B. die zweite Welle 4) für unterschiedliche Werte der Geschwindigkeit 29 des Kraftfahrzeugs (und für unterschiedliche Werte der ersten Drehzahl 10 der ersten Welle 3 vor dem Öffnen der ersten Kupplung 5). Auch bei dem zweiten Verlauf 26 wurde die erste Welle 3 nach dem Öffnen der ersten Kupplung 5 nicht beschleunigt.

Es zeigt sich hier, dass über den gesamten Geschwindigkeitsbereich eine deutliche Reduzierung (bis zu 60 % bei der höchsten Geschwindigkeit 29) des Schleppmoments 9 erreicht werden kann (bei einem Vergleich des zweiten Verlaufs 27 mit dem dritten Verlauf 28).

### Bezugszeichenliste

- 1: Antriebsstrang
- 2: Kraftfahrzeug
- 3: erste Welle
- 4: zweite Welle
- 5: erste Kupplung
- 6: erste Reibflächenpaarung
- 7: Antrieb
- 8: Fluid
- 9: Schleppmoment
- 10: erste Drehzahl
- 11: zweite Drehzahl
- 12: dritte Welle
- 13: zweite Kupplung
- 14: zweite Reibflächenpaarung
- 15: Antriebseinheit
- 16: Antriebsdrehmoment
- 17: erstes Rad
- 18: Achse
- 19: zweites Rad
- 20: dritte Kupplung
- 21: Lamelle
- 22: innerer Lamellenträger
- 23: äußerer Lamellenträger
- 24: Fluidleitung
- 25: Drehachse
- 26: erster Verlauf
- 27: zweiter Verlauf
- 28: dritter Verlauf
- 29: Geschwindigkeit

## Patentansprüche

1. Verfahren zum Betrieb eines Antriebsstranges (1) eines Kraftfahrzeugs (2), wobei der Antriebstrang (1) zumindest eine erste Welle (3) und eine zweite Welle (4), eine erste Kupplung (5) mit zumindest einer ersten Reibflächenpaarung (6) sowie einen elektrischen Antrieb (7) umfasst, wobei die erste Welle (3) und die zweite Welle (4) über die zumindest eine erste Reibflächenpaarung (6) miteinander koppelbar sind, wobei zur Kühlung der ersten Kupplung (5) ein Fluid (8) eingesetzt wird, durch das ein Schleppmoment (9) der ersten Kupplung (5) nach dem Öffnen der ersten Kupplung (5) beeinflusst wird, wobei das Verfahren zumindest die folgenden Schritte umfasst:
a) Rotieren der ersten Welle (3) und der zweiten Welle (4) bei zumindest teilweise geschlossener erster Kupplung (5);
b) Öffnen der ersten Kupplung (5); **dadurch gekennzeichnet, dass** das Verfahren folgenden weiteren Schritt umfasst:
c) Beschleunigen der ersten Welle (3) durch den elektrischen Antrieb (7) und Abführen des Fluids (8) aus dem Bereich der zumindest einen ersten Reibflächenpaarung (6);
wobei durch das beschleunigte Abführen des Fluids (8) das Schleppmoment (9) der ersten Kupplung (5) reduziert wird, so dass eine freie Verteilung der bereitgestellten Antriebsdrehmomente auf Räder des Kraftfahrzeuges (2), bekannt als Torque-Vectoring, erreichbar ist.

2. Verfahren nach Patentanspruch 1, wobei zumindest die erste Welle (3) in Schritt a) und unmittelbar vor Schritt b) eine erste Drehzahl (10) aufweist, wobei die erste Welle (3) in Schritt c) durch den elektrischen Antrieb (7) auf eine zweite Drehzahl (11) beschleunigt wird, die zumindest 100 Umdrehungen pro Minute höher ist als die erste Drehzahl (10).

3. Verfahren nach einem der vorhergehenden Patentansprüche, wobei die erste Welle (3) in Schritt c) über einen Zeitraum von mindestens 0,1 Sekunden beschleunigt wird.

4. Verfahren nach einem der vorhergehenden Patentansprüche, wobei die erste Welle (3) in Schritt c) über einen Zeitraum von höchstens 2,0 Sekunden beschleunigt wird.

5. Verfahren nach einem der vorhergehenden Patentansprüche, wobei der Antriebsstrang (1) eine dritte Welle (12) und eine zweite Kupplung (13) mit zumindest einer zweiten Reibflächenpaarung (14) aufweist, wobei die erste Welle (3) und die dritte Welle (12) über die zumindest eine zweite Reibflächenpaarung (14) miteinander koppelbar sind, wobei zur Kühlung der zweiten Kupplung (13) ein Fluid (8) eingesetzt wird, durch das ein Schleppmoment (9) der zweiten Kupplung (13) nach dem Öffnen der zweiten Kupplung (13) beeinflusst wird; wobei in dem Schritt b) die zweite Kupplung (13) geöffnet wird und wobei in dem Schritt c) das Fluid (8) aus dem Bereich der zumindest einen zweiten Reibflächenpaarung (14) abgeführt wird.

6. Verfahren nach einem der vorhergehenden Patentansprüche, wobei Schritt c) ausschließlich dann erfolgt, wenn eine erste Drehzahl (10) der ersten Welle (3) unmittelbar vor Schritt b) höchstens 2.500 Umdrehungen pro Minute beträgt.

7. Verfahren nach einem der vorhergehenden Patentansprüche, wobei der Antriebsstrang (1) eine weitere Antriebseinheit (15) aufweist, wobei ein Antriebsdrehmoment (16) der Antriebseinheit (15) über die erste Welle (3) zumindest auf die zweite Welle (4) und über die zweite Welle (4) auf ein erstes Rad (17) des Kraftfahrzeugs (2) übertragbar ist, wobei vor Schritt c) die weitere Antriebseinheit (15) von der ersten Welle (3) entkoppelt wird.

8. Antriebsstrang (1) für ein Kraftfahrzeug (2), wobei der Antriebstrang (1) zumindest eine erste Welle (3) und eine zweite Welle (4), eine erste Kupplung (5) mit zumindest einer ersten Reibflächenpaarung (6) sowie einen elektrischen Antrieb (7) umfasst, wobei die erste Welle (3) und die zweite Welle (4) über die zumindest eine erste Reibflächenpaarung (6) miteinander koppelbar sind, **dadurch gekennzeichnet, dass** der Antriebsstrang (1) zur Durchführung des Verfahrens nach einem der vorherigen Patentansprüche eingerichtet und geeignet ist.

9. Antriebsstrang (1) nach Patentanspruch 8, wobei die erste Welle (3) und die zweite Welle (4) Bestandteil einer gemeinsamen Achse (18) des Kraftfahrzeuges (2) sind, wobei über die zweite Welle (4) ein erstes Rad (17) des Kraftfahrzeuges (2) mit der ersten Welle (3) verbindbar ist.

10. Antriebsstrang (1) nach Patentanspruch 9, wobei der Antriebsstrang (1) eine dritte Welle (12) und eine zweite Kupplung (13) mit zumindest einer zweiten Reibflächenpaarung (14) aufweist, wobei die erste Welle (3) und die dritte Welle (12) über die zumindest eine zweite Reibflächenpaarung (14) miteinander koppelbar sind; wobei auch die dritte Welle (12) Bestandteil der Achse (18) ist, wobei über die dritte Welle (12) ein zweites Rad (19) des Kraftfahrzeuges (2) mit der ersten Welle (3) verbindbar ist.

11. Antriebsstrang (1) nach einem der vorhergehenden Patentansprüche 8 bis 10, wobei der Antriebsstrang (1) eine weitere Antriebseinheit (15) aufweist, wobei ein Antriebsdrehmoment (16) der Antriebseinheit (15) über die erste Welle (3) zumindest auf die zweite Welle (4) und über die zweite Welle (4) auf ein erstes Rad (17) des Kraftfahrzeugs (2) übertragbar ist, wobei die Antriebseinheit (1) über zumindest eine dritte Kupplung (20) von der ersten Welle (3) entkoppelbar ist.

## Claims

1. Method for operating a drive train (1) of a motor vehicle (2), wherein the drive train (1) includes at least a first shaft (3) and a second shaft (4), a first clutch (5) having at least one first friction surface pairing (6), and an electric drive (7), the first shaft (3) and the second shaft (4) being coupleable to one another via the at least one first friction surface pairing (6), wherein for cooling the first clutch (5), a fluid (8) is used via which a drag torque (9) of the first clutch (5) is influenced after the first clutch is disengaged (5), wherein the method includes at least the following steps:
a) Rotating the first shaft (3) and the second shaft (4) when the first clutch (5) is at least partially engaged;
b) Disengaging the first clutch (5);
**characterized in that** the method comprises the following step:
c) Accelerating the first shaft (3) by means of the electric drive (7) and discharging the fluid (8) from the area of the at least one first friction surface pairing (6);
wherein the drag torque (9) of the first clutch (5) is reduced by the accelerated discharge of the fluid (8), so that a free as possible distribution of the provided to the wheels of the motor vehicle, known as torque vectoring, is achievable.

2. Method according to Claim 1, wherein at least the first shaft (3) has a first rotational speed (10) in step a) and immediately prior to step b), wherein in step c) the first shaft (3) is accelerated by the electric drive (7) to a second rotational speed (11) that is at least 100 revolutions per minute greater than the first rotational speed (10).

3. Method according to one of the preceding claims, wherein in step c) the first shaft (3) is accelerated over a time period of at least 0.1 second.

4. Method according to one of the preceding claims, wherein in step c) the first shaft (3) is accelerated over a time period of at most 2.0 seconds.

5. Method according to one of the preceding claims, wherein the drive train (1) has a third shaft (12) and a second clutch (13) having at least one second friction surface pairing (14), wherein the first shaft (3) and the third shaft (12) are coupleable to one another via the at least one second friction surface pairing (14), wherein for cooling the second clutch (13), a fluid (8) is used via which a drag torque (9) of the second clutch (13) is influenced after the second clutch (13) is disengaged; wherein in step b) the second clutch (13) is disengaged, and wherein in step c) the fluid (8) is discharged from the area of the at least one second friction surface pairing (14).

6. Method according to one of the preceding claims, wherein step c) takes place only when a first rotational speed (10) of the first shaft (3) immediately prior to step b) is at most 2500 revolutions per minute.

7. Method according to one of the preceding claims, wherein the drive train (1) has a further drive unit (15), wherein a drive torque (16) of the drive unit (15) is transmittable via the first shaft (3) at least to the second shaft (4), and via the second shaft (4) to a first wheel (17) of the motor vehicle (2), wherein the further drive unit (15) is decoupled from the first shaft (3) prior to step c).

8. Drive train (1) for a motor vehicle (2), wherein the drive train (1) includes at least a first shaft (3) and a second shaft (4), a first clutch (5) having at least one first friction surface pairing (6), and an electric drive (7), the first shaft (3) and the second shaft (4) being coupleable to one another via the at least one first friction surface pairing (6), wherein the drive train (1) is configured and suitable for carrying out the method according to one of the preceding claims.

9. Drive train (1) according to Claim 8, wherein the first shaft (3) and the second shaft (4) are integral parts of a common axle (18) of the motor vehicle (2), a first wheel (17) of the motor vehicle (2) being connectable to the first shaft (3) via the second shaft (4).

10. Drive train (1) according to Claim 9, wherein the drive train (1) has a third shaft (12) and a second clutch (13) having at least one second friction surface pairing (14), wherein the first shaft (3) and the third shaft (12) are coupleable to one another via the at least one second friction surface pairing (14); wherein the third shaft (12) is also an integral part of the axle (18), a second wheel (19) of the motor vehicle (2) being connectable to the first shaft (3) via the third shaft (12).

11. Drive train (1) according to one of preceding Claims 8 to 10, wherein the drive train (1) has a further drive unit (15), wherein a drive torque (16) of the drive unit (15) is transmittable via the first shaft (3) at least to the second shaft (4), and via the second shaft (4) to a first wheel (17) of the motor vehicle (2), the drive unit (1) being decoupleable from the first shaft (3) via at least a third clutch (20).

## Revendications

1. Procédé permettant de faire fonctionner une chaîne cinématique (1) d'un véhicule automobile (2), la chaîne cinématique (1) comportant au moins un premier arbre (3) et un deuxième arbre (4), un premier embrayage (5) doté d'au moins une première paire de surfaces de friction (6) ainsi qu'un entraînement électrique (7), le premier arbre (3) et le deuxième arbre (4) pouvant être accouplés l'un à l'autre par le biais de l'au moins une première paire de surfaces de friction (6), un fluide (8) étant utilisé pour le refroidissement du premier embrayage (5), fluide par le biais duquel un couple résistant (9) du premier embrayage (5) est influencé après l'ouverture du premier embrayage (5), le procédé comportant au moins les étapes suivantes :
a) rotation du premier arbre (3) et du deuxième arbre (4) lorsque le premier embrayage (5) est au moins partiellement fermé ;
b) ouverture du premier embrayage (5) ;
**caractérisé en ce que** le procédé comporte les autres étapes suivantes :
c) accélération du premier arbre (3) au moyen de l'entraînement électrique (7) et évacuation du fluide (8) hors de la région de l'au moins une première paire de surfaces de friction (6) ;
le couple résistant (9) du premier embrayage (5) étant réduit par l'évacuation accélérée du fluide (8), de sorte qu'une distribution libre des couples d'entraînement produits sur les roues du véhicule automobile (2), connue sous le nom de « torque vectoring » (contrôle vectoriel du couple), puisse être obtenue.

2. Procédé selon la revendication 1, au moins le premier arbre (3) ayant une première vitesse de rotation (10) à l'étape a) et immédiatement avant l'étape b), le premier arbre (3) étant, à l'étape c), accéléré par l'entraînement électrique (7) à une deuxième vitesse de rotation (11) qui est supérieure à la première vitesse de rotation (10) d'au moins 100 tours par minute.

3. Procédé selon l'une des revendications précédentes, le premier arbre (3) étant, à l'étape c), accéléré pendant un laps de temps d'au moins 0,1 seconde.

4. Procédé selon l'une des revendications précédentes, le premier arbre (3) étant, à l'étape c), accéléré pendant un laps de temps d'au maximum 2,0 secondes.

5. Procédé selon l'une des revendications précédentes, la chaîne cinématique (1) comprenant un troisième arbre (12) et un deuxième embrayage (13) doté d'au moins une deuxième paire de surfaces de friction (14), le premier arbre (3) et le troisième arbre (12) pouvant être accouplés l'un à l'autre par le biais de l'au moins une deuxième paire de surfaces de friction (14), un fluide (8) étant utilisé pour le refroidissement du deuxième embrayage (13), fluide par le biais duquel un couple résistant (9) du deuxième embrayage (13) est influencé après l'ouverture du deuxième embrayage (13) ; le deuxième embrayage (13) étant ouvert à l'étape b) et le fluide (8) étant évacué hors de la région de l'au moins une deuxième paire de surfaces de friction (14) à l'étape c).

6. Procédé selon l'une des revendications précédentes, l'étape c) ayant lieu exclusivement lorsqu'une première vitesse de rotation (10) du premier arbre (3) immédiatement avant l'étape b) est d'au maximum 2500 tours par minute.

7. Procédé selon l'une des revendications précédentes, la chaîne cinématique (1) comprenant une autre unité d'entraînement (15), un couple d'entraînement (16) de l'unité d'entraînement (15) pouvant être transmis au moins au deuxième arbre (4) par le biais du premier arbre (3) et à une première roue (17) du véhicule automobile (2) par le biais du deuxième arbre (4), l'autre unité d'entraînement (15) étant désaccouplée du premier arbre (3) avant l'étape c).

8. Chaîne cinématique (1) pour un véhicule automobile (2), la chaîne cinématique (1) comportant au moins un premier arbre (3) et un deuxième arbre (4), un premier embrayage (5) doté d'au moins une première paire de surfaces de friction (6) ainsi qu'un entraînement électrique (7), le premier arbre (3) et le deuxième arbre (4) pouvant être accouplés l'un à l'autre par le biais de l'au moins une première paire de surfaces de friction (6), **caractérisée en ce que** la chaîne cinématique (1) est conçue et appropriée pour la mise en œuvre du procédé selon l'une des revendications précédentes.

9. Chaîne cinématique (1) selon la revendication 8, le premier arbre (3) et le deuxième arbre (4) faisant partie d'un essieu commun (18) du véhicule automobile (2), une première roue (17) du véhicule automobile (2) pouvant être reliée au premier arbre (3) par le biais du deuxième arbre (4).

10. Chaîne cinématique (1) selon la revendication 9, la chaîne cinématique (1) comprenant un troisième arbre (12) et un deuxième embrayage (13) doté d'au moins une deuxième paire de surfaces de friction (14), le premier arbre (3) et le troisième arbre (12) pouvant être accouplés l'un à l'autre par le biais de l'au moins une deuxième paire de surfaces de friction (14) ; le troisième arbre (12) faisant également partie de l'essieu (18), une deuxième roue (19) du véhicule automobile (2) pouvant être reliée au premier arbre (3) par le biais du troisième arbre (12).

11. Chaîne cinématique (1) selon l'une des revendications précédentes 8 à 10, la chaîne cinématique (1) comprenant une autre unité d'entraînement (15), un couple d'entraînement (16) de l'unité d'entraînement (15) pouvant être transmis au moins au deuxième arbre (4) par le biais du premier arbre (3) et à une première roue (17) du véhicule automobile (2) par le biais du deuxième arbre (4), l'unité d'entraînement (1) pouvant être désaccouplée du premier arbre (3) par le biais d'au moins un troisième embrayage (20).
